# EUROPEAN PATENT APPLICATION

(11) **EP 4 691 729 A1**
(43) Date of publication of application: **11.02.2026**
(21) Application number: 24795918.2
(22) Date of filing: 17.04.2024
(51) Int. Cl.: B29C 45/14, B29C 45/33, B29C 33/12, B29B 11/04

(54) **MANUFACTURING METHOD FOR FIBER COTTON SEPARATION MODULE OF OIL-GAS SEPARATOR**

(30) Priority: 24.04.2023 CN 202310442729
(71) Applicant: Shentong Technology Group Co., Ltd., Ningbo, Zhejiang 315400 (CN)
(72) Inventor: RAO, Congchao, Ningbo, Zhejiang 315400 (CN); FANG, Lifeng, Ningbo, Zhejiang 315400 (CN); MAO, Jinxin, Ningbo, Zhejiang 315400 (CN); LIU, Qi, Ningbo, Zhejiang 315400 (CN)
(74) Representative: Huang, Liwei
(86) International application number: PCT/CN2024/088194
(87) International publication number: WO 2024/222537

(57) **Abstract**

Disclosed in the present invention is a method for manufacturing a fiber-membrane separation module for an oil-gas separator. The manufacturing method comprises: sewing fiber-membrane sheets into a fiber-membrane cylinder; disposing the fiber-membrane cylinder in an injection mold, wherein a plurality of inward retractable blocks tighten an inner wall of the fiber-membrane cylinder, at least two sliding blocks clamp a sewing portion on an outer side of the fiber-membrane cylinder, a plurality of sliding blocks are movably attached to an outer wall of the fiber-membrane cylinder, and an ejector sleeve is movably provided below the fiber-membrane cylinder and the plurality of sliding blocks; injecting molten plastic into the injection mold to form a plastic framework; and after cooling for a preset time, opening the injection mold, and ejecting a fiber-membrane separation module by means of the ejector sleeve.

## Description

### TECHNICAL FIELD

The present invention relates to the technical field of oil-gas separators, and particularly to a method for manufacturing a fiber-membrane separation module for an oil-gas separator.

### BACKGROUND

Automobile oil-gas separators are mainly divided into passive and active types. Although a passive oil-gas separator has a simple structure, its separation efficiency is low. An active oil-gas separator has a high separation efficiency and is used increasingly in automobiles.

An active oil-gas separator mainly includes a coarse separation module and a fine separation module, wherein the coarse separation module generally adopts a conventional baffle or a labyrinth baffle circuit. The main structure of a fine separation module includes a sleeve, a centrifugal separation module and a separation filtration module, wherein the centrifugal separation module is generally realized by a motor-driven impeller. The separation filtration module is mainly composed of fiber membrane and a support framework, wherein the fiber membrane is inserted into the support framework to filter the engine oil.

In actual use, the fiber membrane is easy to fall out of the support framework, and during high-speed rotation, the fiber membrane is easy to move relative to the support framework, affecting the separation effect. Therefore, it is necessary to develop a manufacturing method in which the fiber membrane and the support frame are integrally formed to ensure the use effect of the fiber-membrane separation module while ensuring the molding quality of the fiber-membrane separation module.

### SUMMARY

### Technical problem

In view of the aforementioned deficiencies in the prior art, a technical problem to be solved in the present invention is to provide a method for manufacturing a fiber-membrane separation module for an oil-gas separator, which is of high quality in molding, has a simple process and has a compact formed mold structure.

### Technical solutions

The technical solution adopted in the present invention to solve the technical problems is to provide a method for manufacturing a fiber-membrane separation module for an oil-gas separator; the fiber-membrane separation module includes a plastic framework and a fiber-membrane cylinder, and the fiber-membrane cylinder and the plastic framework are integrally formed in an injection molding mode; wherein,
the fiber-membrane cylinder is in a hollow cylinder shape, and sewing portions are arranged on the fiber-membrane cylinder; the plastic framework includes a top ring, a bottom ring, a clamping portion and a plurality of ribs; the clamping portion and the plurality of ribs are connected between the top ring and the bottom ring, and are arranged in the circumferential direction of the top ring and the bottom ring; the sewing portions are clamped on the clamping portion;
the manufacturing method includes:
   sewing fiber-membrane sheets into the fiber-membrane cylinder, and shaping the sewn fiber-membrane cylinder into a hollow cylinder shape through a shaping tool;
   disposing the fiber-membrane cylinder in an injection mold, wherein, the injection mold includes a inward retractable mechanism, an ejector sleeve and a plurality of sliding blocks, the inward retractable mechanism includes a mounting base and a plurality of inward retractable blocks movably mounted on the mounting base, and the plurality of inward retractable blocks tighten an inner wall of the fiber-membrane cylinder; the plurality of sliding blocks are arranged in the circumferential direction of the inward retractable mechanism, at least two sliding blocks clamp the sewing portion on an outer side of the fiber-membrane cylinder, and a plurality of sliding blocks are movably attached to an outer wall of the fiber-membrane cylinder; an ejector sleeve is movably provided below the fiber-membrane cylinder and the plurality of sliding blocks;
   injecting molten plastic into the injection mold to form the plastic framework, wherein, the plastic framework and the fiber-membrane cylinder are integrally formed in an injection molding mode to form the fiber-membrane separation module, and the bottom ring is attached to the ejector sleeve;
   after cooling for a preset time, opening the injection mold, wherein, the plurality of sliding blocks are pulled outwardly and detached from the fiber-membrane separation module; the plurality of inward retractable blocks move inwardly relative to the mounting base and are detached from the inner wall of the fiber-membrane cylinder; ejecting a fiber-membrane separation module by means of the ejector sleeve.

Further, the plurality of sliding blocks include a first sliding block and a second sliding block; a plurality of first clamping convex teeth are arranged on the side, close to the second sliding block, of the first sliding block; a plurality of second clamping convex teeth are arranged on the side, close to the first sliding block, of the second sliding block; the plurality of second clamping convex teeth correspond to the plurality of first clamping convex teeth one to one, and gaps are formed between the second clamping convex teeth and the first clamping convex teeth;
the sewing portions are clamped in the gaps.

Further, the cross sections of the first clamping convex teeth and the second clamping convex teeth are semicircular.

Further, two sewing portions are symmetrically arranged on the fiber-membrane cylinder;
the plurality of sliding blocks further include a third sliding block and a fourth sliding block; the plurality of first clamping convex teeth are arranged on the third sliding block, and the plurality of second clamping convex teeth are arranged on the fourth sliding block; and
the sewing portions away from the first sliding block and the second sliding block are clamped between the first clamping convex teeth on the third sliding block and the second clamping convex teeth on the fourth sliding block.

Further, the third sliding block and the first sliding block are arranged in a central symmetry mode, and the fourth sliding block and the second sliding block are arranged in a central symmetry mode;
the first sliding block, the second sliding block, the third sliding block and the fourth sliding block movably abut against one another in sequence.

Further, soft rubber materials are arranged at the ends, close to a inward retractable mechanism, of the plurality of sliding blocks; and the soft rubber materials on the sliding blocks are attached to the outer wall of the fiber-membrane cylinder.

Further, a plurality of dovetail grooves are formed in the mounting base in the circumferential direction, dovetail blocks are arranged on inward retractable blocks, and the dovetail blocks are movably provided in the dovetail grooves;
the dovetail grooves are gradually inclined outwardly from top to bottom.

Further, the plurality of inward retractable blocks sequentially form a first column body, a second column body and a third column body from bottom to top; the diameter of the first column body is larger than the diameter of the second column body, and the diameter of the second column body is larger than the diameter of the third column body;
the fiber-membrane cylinder tightens the first column body, and the second column body supports the fiber-membrane cylinder.

Further, a pressing step is arranged on the ejector sleeve;
the second column body is arranged in the ejector sleeve in a penetrating mode and is movably attached to the ejector sleeve, and the pressing step movably abuts against the first column body.

Further, arc-shaped grooves are formed in the bottoms of the first sliding block, the second sliding block, the third sliding block and the fourth sliding block;
the ejector sleeve is movably disposed in the plurality of arc-shaped grooves.

### Beneficial Effects

Compared with the prior art, the present invention has achieved at least the following beneficial effects.

According to the present invention, the fiber-membrane cylinder is formed by sewing two pieces of fiber membranes, and two sewing portions (i.e. sewing seams) are reserved on the outer wall of the fiber-membrane cylinder. When the fiber-membrane cylinder shaped into the hollow cylinder is positioned and fixed in an injection mold, the inner wall of the fiber-membrane cylinder is tightened through the plurality of inward retractable blocks in the inward retractable mechanism, so that the inner ring of the fiber-membrane cylinder is fixed, and meanwhile the inner wall of the fiber-membrane cylinder is kept cylindrical; the outer wall of the fiber-membrane cylinder is clamped by means of a plurality of sliding blocks, and the sliding blocks are attached to the outer wall of the fiber-membrane cylinder, so that the outer wall of the fiber-membrane cylinder is fixed, and meanwhile the outer wall of the fiber-membrane cylinder is kept cylindrical; the first clamping convex teeth and the second clamping convex teeth with semicircular cross sections are arranged on the corresponding sliding blocks respectively, the sewing portions on the fiber-membrane cylinder are clamped, so that the fiber-membrane cylinder is clamped and positioned, meanwhile, the sewing portions are prevented from overflowing and glue leakage or excessive deformation during injection molding, and the forming quality of the fiber-membrane separation module is high. After the fiber-membrane cylinder and the plastic framework are integrally formed through injection molding, the two sewing portions (i.e. the sewing seams) of the fiber-membrane cylinder are clamped by clamping portions on the plastic framework, the two ends of the fiber-membrane cylinder are limited and supported through the top ring and the bottom ring respectively, the fiber-membrane cylinder and the plastic framework cannot move and be separated relatively in the high-speed rotating process, and thus the using effect of the fiber-membrane separation module can be effectively guaranteed. In addition, soft rubber materials are arranged at the ends, close to the fiber-membrane cylinder, of the plurality of sliding blocks. Since the hardness of the soft rubber materials is smaller than that of sliding block body materials, when the outer wall of the fiber-membrane cylinder is clamped by the sliding blocks, the fiber-membrane cylinder can be prevented from being damaged, and glue overflowing during injection molding can be prevented.

### BRIEF DESCRIPTION OF THE DRAWINGS

FIG. 1 is a structural schematic diagram of a fiber-membrane separation module of the present invention;
FIG. 2 is an exploded view of FIG. 1;
FIG. 3 is an assembly diagram of a sprue bush, a fixed mold core, a sliding block, an ejector sleeve and a inward retractable mechanism of an injection mold;
FIG. 4 is a structural schematic diagram of FIG. 3 after removing a sprue bush and a fixed mold core;
FIG. 5 is an assembly diagram of a inward retractable mechanism and a fiber-membrane separation module;
FIG. 6 is an assembly diagram of a sliding block and a fiber-membrane separation module;
FIG. 7 is an assembly diagram of a inward retractable mechanism, a fiber-membrane separation module and an ejector sleeve;
FIG. 8 is a structural schematic diagram of a inward retractable mechanism;
FIG. 9 is an assembly diagram of an ejector sleeve, a first sliding block and a second sliding block;
FIG. 10 is a manufacturing flow diagram of a fiber-membrane separation module.

### Reference numerals:

1, fiber-membrane separation module; 11, plastic framework; 111, top ring; 112, bottom ring; 13, clamping portion; 114, rib; 12, fiber-membrane cylinder; 120, sewing portion;
2, inward retractable mechanism; 21, mounting base; 210, dovetail groove; 22, inward retractable block; 220, dovetail block; 221, first column body; 222, second column body; 223, third column body;
3, ejector sleeve;
41, first sliding block; 42, second sliding block; 43, third sliding block; 44, fourth sliding block; 411, first clamping convex teeth; 421, second clamping convex teeth; 400, arc-shaped groove;
5, sprue bush;
6, fixed mold core.

### DETAILED DESCRIPTION OF EMBODIMENTS

The technical solutions of the present invention are further described in conjunction with the specific embodiments and accompanying drawings, but the present invention is not limited to these embodiments.

It should be noted that all directional indications (such as up, down, left, right, front, back, etc.) in the embodiments of the present invention are only used to explain the relative position relationship, movement, etc. between the components under a specific posture (as shown in the figures). If the specific posture changes, the directional indication will also change accordingly.

Furthermore, in the present invention, the descriptions such as "first", "second", "one", etc. are only used for descriptive purposes, and should not be construed as indicating or implying their relative importance or implicitly indicating the number of technical features indicated. Therefore, the features defined as "first" and "second" may explicitly or implicitly include at least one of the features. In the description of the present invention, "a/the plurality of " means at least two, for example, two, three, etc., unless otherwise clearly and specifically defined.

In the present invention, unless otherwise clearly specified and defined, the terms "connection/connected", "fix/fixed", etc. should be understood in a broad sense. For example, "fix/fixed" can be fixedly connected, detachably connected or integrated; can be mechanically connected or electrically connected; can be directly connected or indirectly connected through an intermediate medium, can be internally communicated or mutually interacted between two elements, unless otherwise clearly defined. For those skilled in the art, the specific meanings of the above terms in the present invention can be understood according to specific circumstances.

Furthermore, the technical solutions between various embodiments of the present invention can be mutually combined provided that these solutions can be achieved by a person of ordinary skill in the art. When the combination of technical solutions is contradictory or cannot be implemented, it should be considered that such a combination of technical solutions does not exist and is not within the scope of protection of the present invention.

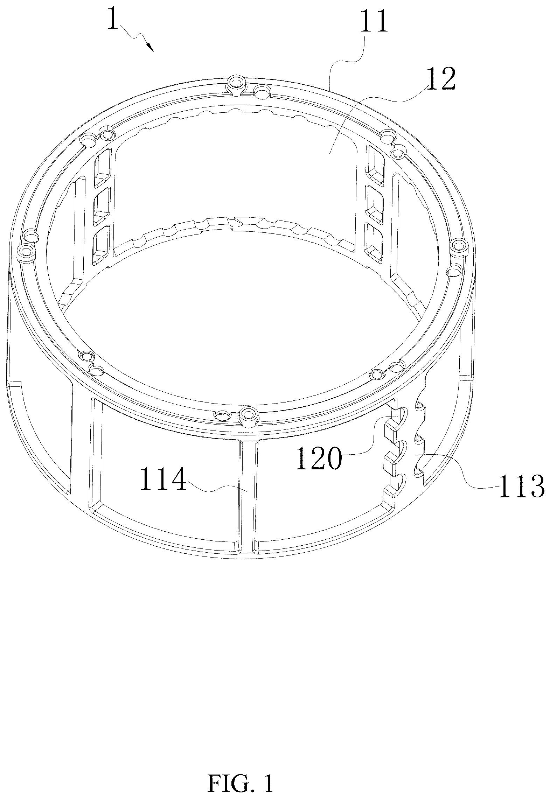

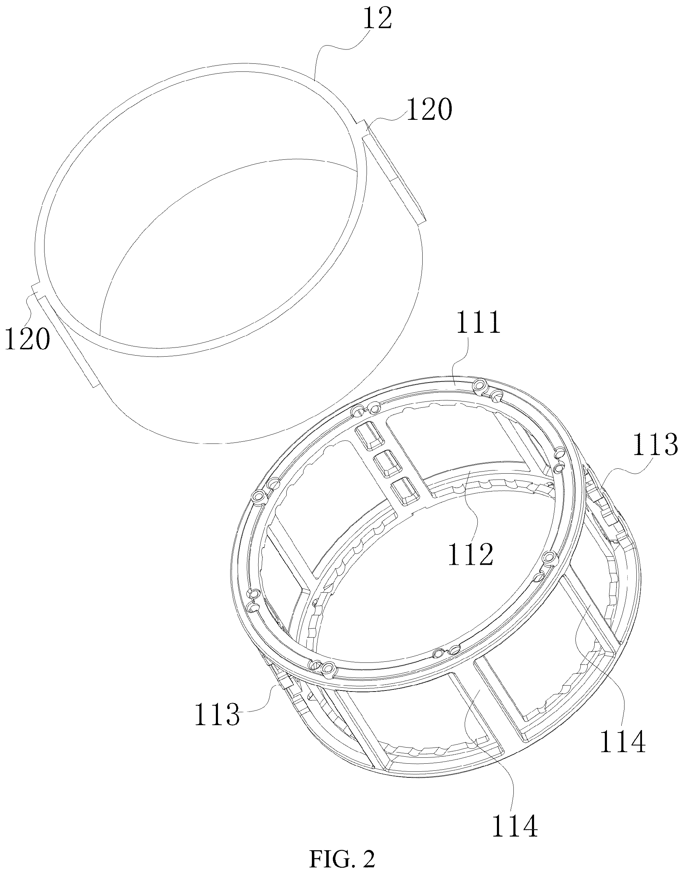

As shown in FIG. 1 and FIG. 2, a fiber-membrane separation module 1 for an oil-gas separator in this embodiment includes a plastic framework 11 and a fiber-membrane cylinder 12, and the fiber-membrane cylinder 12 and the plastic framework 11 are integrally formed in an injection molding mode; wherein, the fiber-membrane cylinder 12 is in a hollow cylinder shape, and sewing portions 120 are arranged on the fiber-membrane cylinder 12. Specifically, the fiber-membrane cylinder 12 is formed by sewing two fiber-membrane sheets, and two ends of the two sheet fiber-membrane are sewn separately, so two sewing portions 120, i.e., sewing seams, are formed on the outer wall of the fiber-membrane cylinder 12. The plastic framework 11 includes a top ring 111, a bottom ring 112, a clamping portion 13 and a plurality of ribs 114; the clamping portion 13 and the plurality of ribs 114 are connected between the top ring 111 and the bottom ring 112, and are arranged in the circumferential direction of the top ring 111 and the bottom ring 112; the sewing portions 120 are clamped on the clamping portion 13. The sewing portion 120 is clamped by the clamping portion 13 to ensure that the fiber-membrane cylinder 12 does not shift in the plastic frame 11. A gap is formed in the clamping portion 13, and the sewing portion 120 is located in the gap, such that the clamping portion 13 clamps the sewing portion 120. The plurality of ribs 114 can increase the reinforcement of the fiber-membrane cylinder 12 to prevent it from deformation.

After the fiber-membrane cylinder 12 and the plastic framework 11 are integrally formed through injection molding, the two sewing portions 120 (convex sewing seams) of the fiber-membrane cylinder 12 are clamped by clamping portions 13 on the plastic framework 11, the two ends of the fiber-membrane cylinder 12 are limited and supported through the top ring 111 and the bottom ring 112 respectively, the fiber-membrane cylinder 12 and the plastic framework 11 cannot move and be separated relatively in the high-speed rotating process, and thus the using effect of the fiber-membrane separation module 1 can be effectively guaranteed.

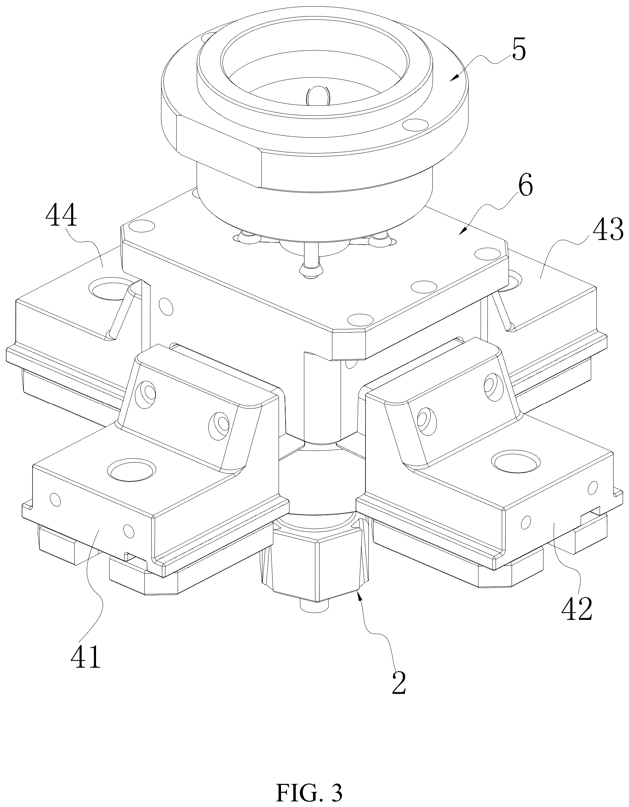

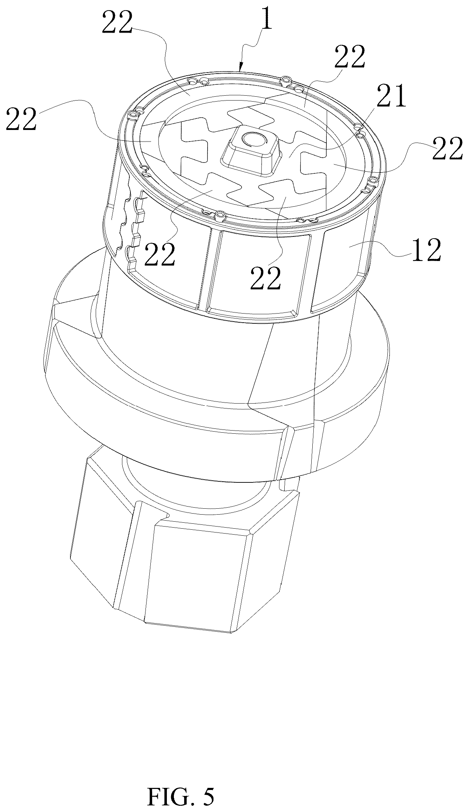

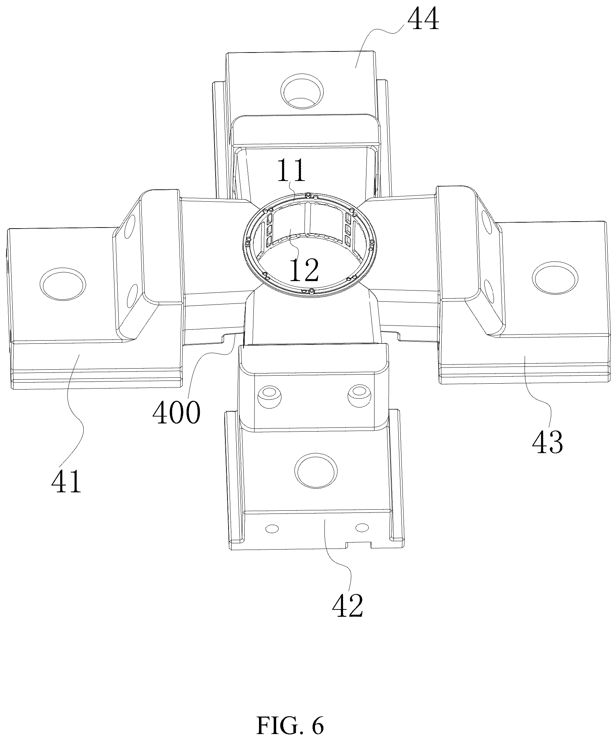

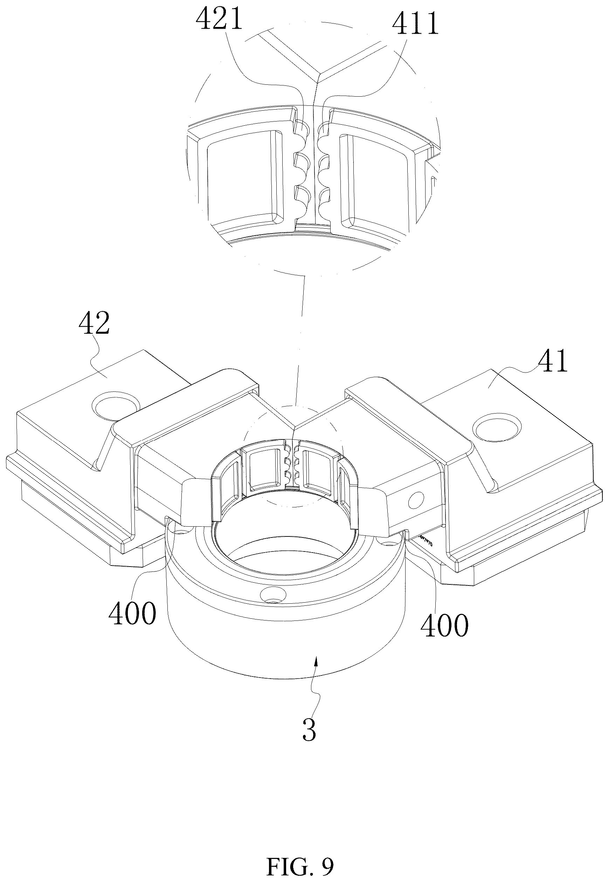

As shown in FIG. 3 to FIG. 9, the core structure of the injection mold for molding the fiber-membrane separation module 1 of the oil-gas separator in this embodiment is illustrated. Wherein, the injection mold includes a inward retractable mechanism 2, an ejector sleeve 3 and a plurality of sliding blocks, the inward retractable mechanism 2 includes a mounting base 21 and a plurality of inward retractable blocks 22 movably mounted on the mounting base 21, and the plurality of inward retractable blocks 22 tighten an inner wall of the fiber-membrane cylinder 12. When the plurality of inward retractable blocks 22 tighten an inner wall of the fiber-membrane cylinder 12, it is equivalent to correcting the shape of the fiber-membrane cylinder 12 and keeping it cylindrical. When the inward retractable blocks 22 need to be detached from the inner wall of the fiber-membrane cylinder 12, the inward retractable blocks 22 only need to move inwardly (i.e., retract) relative to the mounting base 21, and the inward retractable mechanism 2 will not tension the fiber-membrane cylinder 12 any longer.

During the actual manufacturing process, the fiber-membrane cylinder 12 is formed by sewing two pieces of fiber membranes, and two sewing portions 120 (i.e., convex sewing seams) are reserved on the outer wall of the fiber-membrane cylinder. When the fiber-membrane cylinder 12 shaped into the hollow cylinder is positioned and fixed in an injection mold, the inner wall of the fiber-membrane cylinder 12 is tightened through the plurality of inward retractable blocks 22 in the inward retractable mechanism 2, so that the inner ring of the fiber-membrane cylinder 12 is fixed, and meanwhile the inner wall of the fiber-membrane cylinder 12 is kept cylindrical.

Specifically, a plurality of dovetail grooves 210 are formed in the mounting base 21 in the circumferential direction, dovetail blocks 220 are arranged on inward retractable blocks 22, and the dovetail blocks 220 are movably provided in the dovetail grooves 210; the dovetail blocks 220 may slide along the dovetail grooves 210. The dovetail grooves 210 are gradually inclined outwardly from top to bottom. Therefore, relatively speaking, when the inward retractable block 22 tensions the fiber-membrane cylinder 12, the inward retractable block 22 is located at a lower position on the mounting base 21; when the inward retractable block 22 moves inwardly and does not tension the fiber-membrane cylinder 12 any longer, the inward retractable block 22 is located at an upper position on the mounting base 21. That is, when the inward retractable block 22 needs to be detached from the fiber-membrane cylinder 12, the inward retractable block 22 slides upwardly along the dovetail groove 210, and meanwhile the inward retractable block 22 moves inwardly.

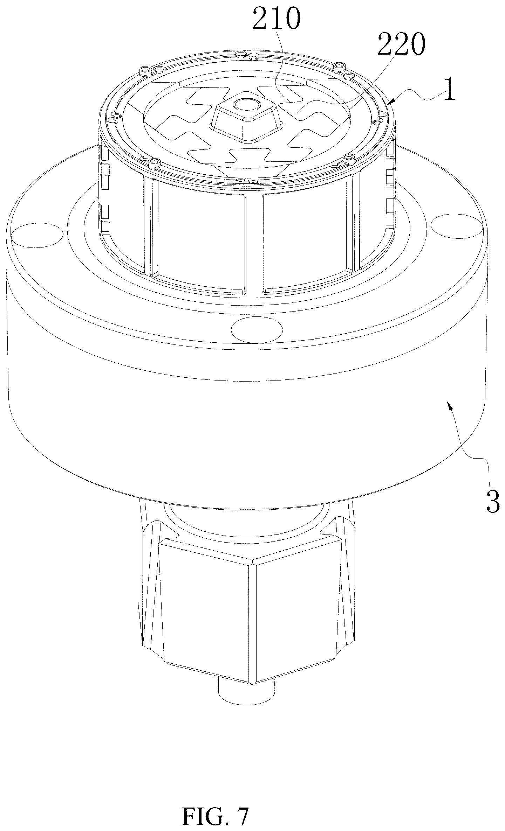

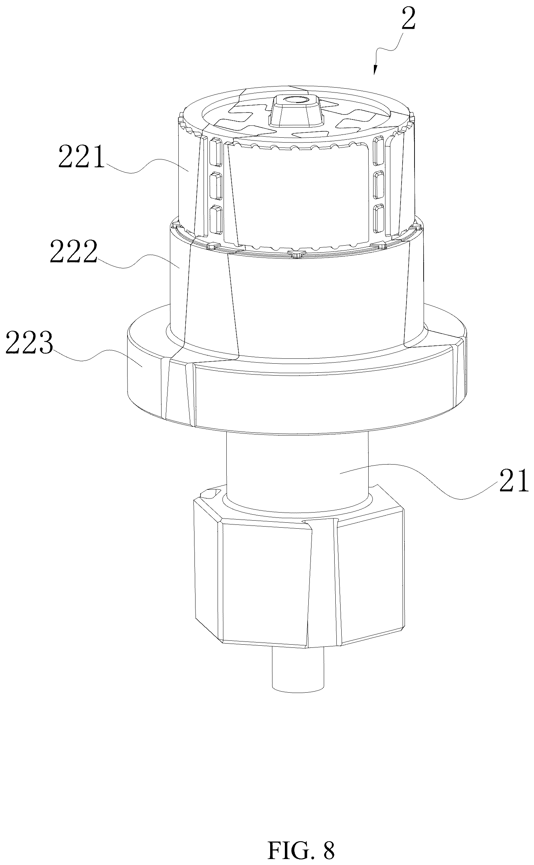

As shown in FIG. 7 and FIG. 8, the plurality of inward retractable blocks 22 sequentially form a first column body 221, a second column body 222 and a third column body 223 from bottom to top, and the diameter of the first column body 221 is larger than the diameter of the second column body 222, and the diameter of the second column body 222 is larger than the diameter of the third column body 223. The fiber-membrane cylinder 12 tightens the first column body 221, and the second column body 222 supports the fiber-membrane cylinder 12. That is, the plurality of inward retractable blocks 22 tension and support the fiber-membrane cylinder 12 to ensure that the fiber-membrane cylinder 12 will not shift during the integral injection molding process.

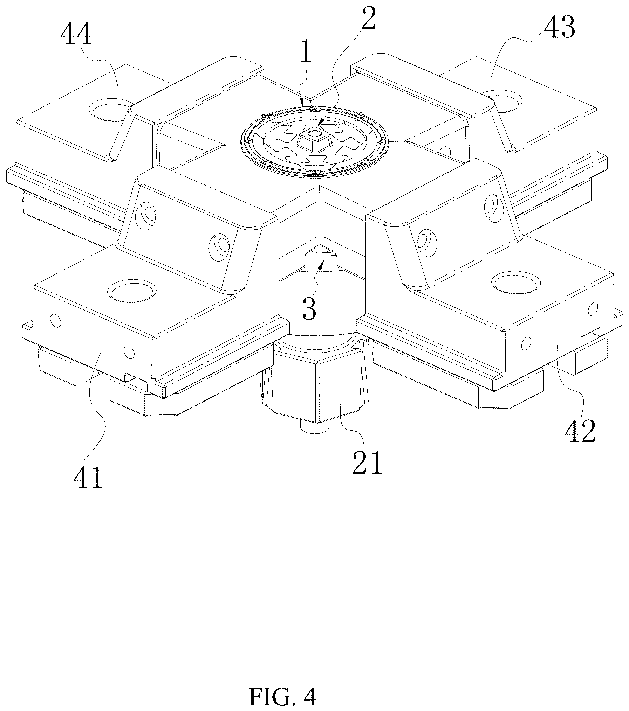

As shown in FIG. 4 to FIG. 6 and FIG. 9, the plurality of sliding blocks are arranged in the circumferential direction of the inward retractable mechanism 2, at least two sliding blocks clamp the sewing portion 120 from the outer side of the fiber-membrane cylinder 12, and a plurality of sliding blocks are movably attached to an outer wall of the fiber-membrane cylinder 12; the ejector sleeve 3 is movably provided below the fiber-membrane cylinder 12 and the plurality of sliding blocks. Wherein, a pressing step (not marked in the figure) is arranged on the ejector sleeve 3, the second column body 222 is arranged in the ejector sleeve 3 in a penetrating mode and is movably attached to the ejector sleeve 3, and the pressing step movably abuts against the first column body 221. The ejector sleeve 3 is not only used to eject the molded fiber-membrane separation module 1, but also can compress the plurality of inward retractable blocks 22. After the inward retractable blocks 22 are reset, the inner wall of the ejector sleeve 3 is attached to the outer wall of the second column body 222, ensuring that the inward retractable blocks 22 are reset reliably.

Specifically, the plurality of sliding blocks include a first sliding block 41 and a second sliding block 42; a plurality of first clamping convex teeth 411 are arranged on the side, close to the second sliding block 42, of the first sliding block 41; a plurality of second clamping convex teeth 421 are arranged on the side, close to the first sliding block 41, of the second sliding block 42; the plurality of second clamping convex teeth 421 correspond to the plurality of first clamping convex teeth 411 one to one, and gaps are formed between the second clamping convex teeth 421 and the first clamping convex teeth 411; the sewing portions 120 are clamped in the gaps. Furthermore, the plurality of sliding blocks further include a third sliding block 43 and a fourth sliding block 44; the plurality of first clamping convex teeth 411 are arranged on the third sliding block 43, and the plurality of second clamping convex teeth 421 are arranged on the fourth sliding block 44. The sewing portions 120 away from the first sliding block 41 and the second sliding block 42 are clamped between the first clamping convex teeth 411 on the third sliding block 43 and the second clamping convex teeth 421 on the fourth sliding block 44.

Overall, the third sliding block 43 and the first sliding block 41 are arranged in a central symmetry mode, and the fourth sliding block 44 and the second sliding block 42 are arranged in a central symmetry mode. The first sliding block 41, the second sliding block 42, the third sliding block 43 and the fourth sliding block 44 movably abut against one another in sequence. Arc-shaped grooves 400 are formed in the bottoms of the first sliding block 41, the second sliding block 42, the third sliding block 43 and the fourth sliding block 44; the ejector sleeve 3 is movably disposed in the plurality of arc-shaped grooves 400. The four arc-shaped grooves 400 of the four sliding blocks form a circular groove, and the ejector sleeve 3 is located in the circular groove. The ejector sleeve 3 can limit the four sliding blocks to ensure the reset position accuracy of the four sliding blocks, thereby ensuring the molding quality of the molded fiber-membrane separation module 1.

Wherein, soft rubber materials are arranged at the ends, close to a inward retractable mechanism 2, of the plurality of sliding blocks; and the soft rubber materials on the sliding blocks are attached to the outer wall of the fiber-membrane cylinder 12. The hardness of the soft rubber materials is much smaller than that of the sliding block body, so as to prevent the fiber-membrane cylinder 12 from being damaged when the fiber-membrane cylinder 12 is in rigid contact with the plurality of sliding blocks.

It can be understood that soft rubber materials are arranged at the ends, close to the fiber-membrane cylinder 12, of the plurality of sliding blocks. Since the hardness of the soft rubber materials is smaller than that of sliding block body materials, when the outer wall of the fiber-membrane cylinder 12 is clamped by the sliding blocks, the fiber-membrane cylinder 12 can be prevented from being damaged, and glue overflowing during injection molding can be prevented.

Wherein, the cross sections of the first clamping convex teeth 411 and the second clamping convex teeth 421 are semicircular. Two sewing portions 120 are symmetrically arranged on the fiber-membrane cylinder 12. The semicircular clamping convex teeth clamp the sewing portions 120 on the fiber-membrane cylinder 12, to ensure that the sewing portions 120 are clamped reliably. Meanwhile, the material of the sewing portions 120 can be squeezed between two adjacent convex teeth, and the material of the sewing portions 120 of the fiber-membrane cylinder 12 will not protrude to other places, thereby ensuring the molding quality of the fiber-membrane separation module 1.

During the actual manufacturing process, the outer wall of the fiber-membrane cylinder 12 is clamped by means of a plurality of sliding blocks, and the sliding blocks are attached to the outer wall of the fiber-membrane cylinder 12, so that the outer wall of the fiber-membrane cylinder 12 is fixed, and meanwhile the outer wall of the fiber-membrane cylinder 12 is kept cylindrical. Furthermore, the first clamping convex teeth 411 and the second clamping convex teeth 421 with semicircular cross sections are arranged on the corresponding sliding blocks respectively, the sewing portions 120 on the fiber-membrane cylinder 12 are clamped, so that the fiber-membrane cylinder 12 is clamped and positioned, meanwhile, the sewing portions 120 are prevented from overflowing and glue leakage or excessive deformation during injection molding, and the forming quality of the fiber-membrane separation module 1 is high.

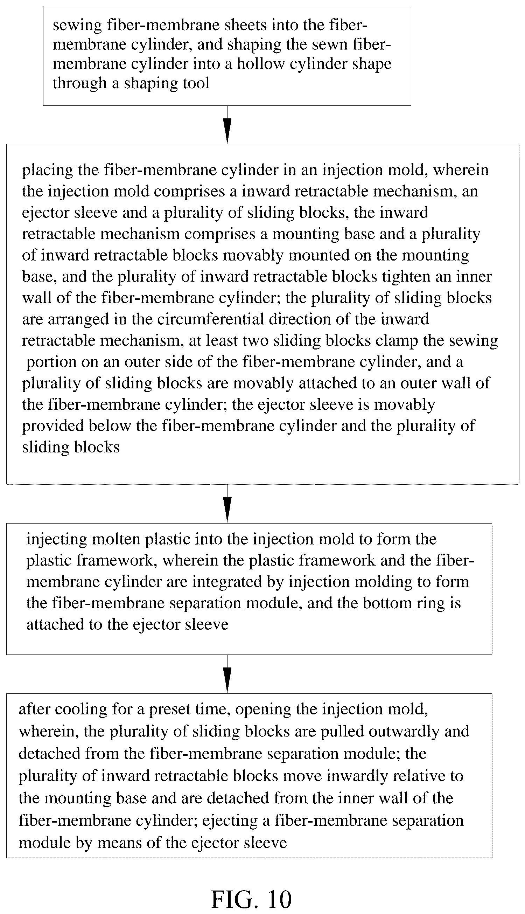

Referring to FIG. 10 and FIG. 3 to FIG. 9, a method for manufacturing a fiber-membrane separation module 1 for an oil-gas separator in this embodiment includes the following steps:
sew two pieces of sheet fiber-membrane into the fiber-membrane cylinder 12 to form two sewing seams, i.e., sewing portions 120, on the fiber-membrane cylinder 12, and shape the sewn fiber-membrane cylinder 12 into a hollow cylinder shape through a shaping tool, so as to facilitate positioning and fixing the hollow cylindrical fiber-membrane cylinder 12 in the injection mold;
dispose the fiber-membrane cylinder 12 in the injection mold; specifically, the fiber-membrane cylinder 12 is sleeved on a first column body 221 formed by a plurality of inward retractable blocks 22 and supported on a second column body; the inner wall of the fiber-membrane cylinder 12 is attached to the outer wall of the first column body 221, the plurality of inward retractable blocks 22 can calibrate the fiber-membrane cylinder 12 while tensioning the fiber-membrane cylinder 12; the first sliding block 41, the second sliding block 42, the third sliding block 43 and the fourth sliding block 44 are reset respectively to clamp the outer wall of the fiber-membrane cylinder 12 and attach to the fiber-membrane cylinder 12, and the corresponding first clamping convex teeth 411 and the second clamping convex teeth 421 on the four sliding blocks clamp the two sewing portions 120; the fiber-membrane cylinder 12 is positioned and fixed by the inward retractable mechanism 2 and the four sliding blocks to ensure the position accuracy of the fiber-membrane cylinder 12, and ensure no glue leakage or excessive deformation for the fiber-membrane cylinder 12 during integrated injection molding process.

Then, inject molten plastic into the injection mold to form the plastic framework 11, wherein, the plastic framework 11 and the fiber-membrane cylinder 12 are integrally formed in an injection molding mode to form the fiber-membrane separation module 1, and the bottom ring 112 is attached to the ejector sleeve 3. The molten plastic is injected from the sprue bush 5 of the injection mold and enters the injection mold through the sprue.

Finally, after cooling for a preset time, open the injection mold; the fixed mold (fixed mold core 6 is a part of the fixed mold) of the injection mold is separated from the movable mold; wherein, the plurality of sliding blocks are pulled outwardly (moving upward while moving inwardly) relative to the mounting base 21 and detached from the inner wall of the fiber-membrane cylinder 12, while the mounting base 21 remains stationary; the fiber-membrane separation module 1 is ejected out through the ejector sleeve 3. The cylindrical ejector sleeve 3 ejects the integrated cylindrical fiber-membrane separation module 1, which ensures that the fiber-membrane separation module 1 is subjected to balanced force and will not be deformed, thereby ensuring the manufacturing quality of the fiber-membrane separation module 1.

In this embodiment, the fiber-membrane separation module 1 manufactured by this manufacturing method is of high quality, has a simple process, and has a compact formed mold structure.

## Claims

1. A method for manufacturing a fiber-membrane separation module for an oil-gas separator, the fiber-membrane separation module comprises a plastic framework and a fiber-membrane cylinder, and the fiber-membrane cylinder and the plastic framework are integrated by injection molding; wherein,
the fiber-membrane cylinder has a hollow cylinder shape, and sewing portions are arranged on the fiber-membrane cylinder; the plastic framework comprises a top ring, a bottom ring, a clamping portion and a plurality of ribs; the clamping portion and the plurality of ribs are connected between the top ring and the bottom ring, and are arranged in the circumferential direction of the top ring and the bottom ring; the sewing portions are clamped by the clamping portion;
**characterized in that** the manufacturing method comprises:
sewing fiber-membrane sheets into the fiber-membrane cylinder, and shaping the sewn fiber-membrane cylinder into a hollow cylinder shape through a shaping tool;
placing the fiber-membrane cylinder in an injection mold, wherein the injection mold comprises a inward retractable mechanism, an ejector sleeve and a plurality of sliding blocks, the inward retractable mechanism comprises a mounting base and a plurality of inward retractable blocks movably mounted on the mounting base, and the plurality of inward retractable blocks tighten an inner wall of the fiber-membrane cylinder; the plurality of sliding blocks are arranged in the circumferential direction of the inward retractable mechanism, at least two sliding blocks clamp the sewing portion on an outer side of the fiber-membrane cylinder, and a plurality of sliding blocks are movably attached to an outer wall of the fiber-membrane cylinder; the ejector sleeve is movably provided below the fiber-membrane cylinder and the plurality of sliding blocks;
injecting molten plastic into the injection mold to form the plastic framework, wherein the plastic framework and the fiber-membrane cylinder are integrated by injection molding to form the fiber-membrane separation module, and the bottom ring is attached to the ejector sleeve;
after cooling for a preset time, opening the injection mold, wherein, the plurality of sliding blocks are pulled outwardly and detached from the fiber-membrane separation module; the plurality of inward retractable blocks move inwardly relative to the mounting base and are detached from the inner wall of the fiber-membrane cylinder; ejecting a fiber-membrane separation module by means of the ejector sleeve.

2. The method for manufacturing a fiber-membrane separation module for an oil-gas separator according to claim 1, **characterized in that** the plurality of sliding blocks comprise a first sliding block and a second sliding block; a plurality of first clamping convex teeth are arranged on the side, close to the second sliding block, of the first sliding block; a plurality of second clamping convex teeth are arranged on the side, close to the first sliding block, of the second sliding block; the plurality of second clamping convex teeth correspond to the plurality of first clamping convex teeth one to one, and gaps are formed between the second clamping convex teeth and the first clamping convex teeth;
the sewing portions are clamped in the gaps.

3. The method for manufacturing a fiber-membrane separation module for an oil-gas separator according to claim 2, **characterized in that** the cross sections of the first clamping convex teeth and the second clamping convex teeth are semicircular.

4. The method for manufacturing a fiber-membrane separation module for an oil-gas separator according to claim 2, **characterized in that** two sewing portions are symmetrically arranged on the fiber-membrane cylinder;
the plurality of sliding blocks further include a third sliding block and a fourth sliding block; the plurality of first clamping convex teeth are arranged on the third sliding block, and the plurality of second clamping convex teeth are arranged on the fourth sliding block; and
the sewing portions away from the first sliding block and the second sliding block are clamped between the first clamping convex teeth on the third sliding block and the second clamping convex teeth on the fourth sliding block.

5. The method for manufacturing a fiber-membrane separation module for an oil-gas separator according to claim 4, **characterized in that** the third sliding block and the first sliding block are arranged in a central symmetry mode, and the fourth sliding block and the second sliding block are arranged in a central symmetry mode;
the first sliding block, the second sliding block, the third sliding block and the fourth sliding block movably abut against one another in sequence.

6. The method for manufacturing a fiber-membrane separation module for an oil-gas separator according to claim 1, **characterized in that** soft rubber materials are arranged at the ends, close to a inward retractable mechanism, of the plurality of sliding blocks; and the soft rubber materials on the sliding blocks are attached to the outer wall of the fiber-membrane cylinder.

7. The method for manufacturing a fiber-membrane separation module for an oil-gas separator according to claim 1, **characterized in that** a plurality of dovetail grooves are formed in the mounting base in the circumferential direction, dovetail blocks are arranged on inward retractable blocks, and the dovetail blocks are movably provided in the dovetail grooves;
the dovetail grooves are gradually inclined outwardly from top to bottom.

8. The method for manufacturing a fiber-membrane separation module for an oil-gas separator according to claim 1, **characterized in that** the plurality of inward retractable blocks sequentially form a first column body, a second column body and a third column body from bottom to top; the diameter of the first column body is larger than the diameter of the second column body, and the diameter of the second column body is larger than the diameter of the third column body;
the fiber-membrane cylinder tightens the first column body, and the second column body supports the fiber-membrane cylinder.

9. The method for manufacturing a fiber-membrane separation module for an oil-gas separator according to claim 7, **characterized in that** the plurality of inward retractable blocks sequentially form a first column body, a second column body and a third column body from bottom to top; the diameter of the first column body is larger than the diameter of the second column body, and the diameter of the second column body is larger than the diameter of the third column body;
the fiber-membrane cylinder tightens the first column body, and the second column body supports the fiber-membrane cylinder.

10. The method for manufacturing a fiber-membrane separation module for an oil-gas separator according to claim 8, **characterized in that** a pressing step is arranged on the ejector sleeve;
the second column body is arranged in the ejector sleeve in a penetrating mode and is movably attached to the ejector sleeve, and the pressing step movably abuts against the first column body.

11. The method for manufacturing a fiber-membrane separation module for an oil-gas separator according to claim 4, **characterized in that** arc-shaped grooves are formed in the bottoms of the first sliding block, the second sliding block, the third sliding block and the fourth sliding block;
the ejector sleeve is movably disposed in the plurality of arc-shaped grooves.
